# EUROPÄISCHE PATENTSCHRIFT

(11) **EP 1 095 082 B1**
(45) Veröffentlichungstag und Bekanntmachung des Hinweises auf die Patenterteilung: **09.01.2002**
(21) Anmeldenummer: 99925026.9
(22) Anmeldetag: 21.05.1999
(51) Int. Cl.: C08G 18/10, C08G 18/08

(54) **VERFAHREN ZUR HERSTELLUNG VON POLYURETHAN-ELASTOMEREN**
METHOD FOR PRODUCING POLYURETHANE ELASTOMERS
PROCEDE POUR LA PRODUCTION D'ELASTOMERES DE POLYURETHANNE

(30) Priorität: 26.05.1998 DE 19823425
(43) Veröffentlichungstag der Anmeldung: 02.05.2001
(73) Patentinhaber: Lehmann & Voss & Co., D-20354 Hamburg (DE)
(72) Erfinder: SCHMIDT, Andreas, CH-4153 Reinach (CH); FEDDERN, Rainer, D-23843 Bad Oldesloe (DE)
(74) Vertreter: Richter, Werdermann & Gerbaulet
(86) Internationale Anmeldenummer: EP9903500
(87) Internationale Veröffentlichungsnummer: WO9961502

(56) Entgegenhaltungen:
- EP-B- 0 672 075
- DE-A- 2 635 400
- DE-A- 19 732 313
- US-A- 5 026 815

## Beschreibung

Die Erfindung betrifft ein Verfahren zur Herstellung von Polyurethan-Elastomeren auf der Basis von TDI-Prepolymeren und M-CDEA (4,4'-Methylen-bis-(3-chloro-2,6diethylanilin)), MDI- und/oder TDI-Isomeren, ferner 4,4'-MDI-, 2,4'-MDI- und 2,2'-MDI-lsomere, wobei TDI für Toluylendiisocyanat, und MDI für die Komponente Methylen- bis -phenyldiisocyanat steht.

Polyurethan-Elastomere sind aufgrund ihrer hervorragenden Eigenschaften, wie z.B. geringe Abrasion, hohe Dehnbarkeit, Beständigkeit gegenüber Lösungsmitteln u. dgl. vielfältig einsetzbare Werkstoffe, deren Eigenschaften je nach Einsatzzweck in vielfältiger Weise durch Wahl der eingesetzten Komponenten variiert werden können.

Zur Herstellung von Polyurethan-Elastomeren geht man von isocyanathaltigen Prepolymeren und einer hydroxy- oder aminogruppenhaltigen zweiten Komponente aus.

Besonders hochwertige Polyurethan-Elastomere können u. a. aus TDI-Prepolymeren und/oder MDI-Polymeren mit M-CDEA (4,4'-Methylen-bis-(3-chloro-2,6diethylanilin)) synthetisiert werden. Diese Möglichkeit ist erstmals in EP 0 220 641 beschrieben. Dabei wird M-CDEA u. a. entweder aufgeschmolzen oder in einem Polyol gelöst und anschließend mit isocyanathaltigen Komponenten zur Reaktion gebracht. Bei der Synthese von Polyurethan-Elastomeren aus vorgenannten Komponenten sind jedoch bestimmte Nachteile gegeben, die zum einen die Verarbeitung erschweren und zum anderen das System für bestimmte Verwendungszwecke ungeeignet machen.

So sind die TDI- und/oder MDI-Prepolymere sehr hitzeempfindlich, d.h. bei Temperaturen oberhalb von 110 °C sinkt der Gehalt an NCO-Gruppen beträchtlich, und auch bei niedrigen Temperaturen setzt bereits der Reaktivitätsverlust ein. Da die Synthese durch das Schmelzen des M-CDEA bei 95°C im Bereich derartiger Temperaturen durchgeführt wird, besteht immer die Gefahr, daß ein minderwertiges Elastomer erhalten wird. Da das M-CDEA zur Synthese aufgeschmolzen werden muß, da es sonst nicht in gewünschter Weise reagiert, kann die Synthese bisher nicht in anderer Weise durchgeführt werden. In Polyolen gelöstes M-CDEA kristallisiert bei Lagertemperaturen unterhalb 35 °C nach einiger Zeit (Wochen/Monate) wieder aus. Eine solche Lösung ist also nicht lagerstabil, so daß das Gemisch oberhalb des Schmelzpunktes von M-CDEA wieder vollständig aufgeschmolzen und homogenisiert werden muß, bevor es zur Polyurethan-synthese eingesetzt werden kann. Auf großen freien Flächen -z.B. "Fußböden" ist eine "Temperung" bei Temperaturen von 60°C bis 140°C über 8 Stunden und länger kaum möglich, bzw. extrem Energieaufwendig. Auβerdem ist bei den heißgehärteten Systemen durch die hohen Temperaturen die Topfzeit sehr gering, was die Verarbeitung erschwert und zuweilen unmöglich macht. Hinzu kommt als nachteilig eine aufwendige Maschinentechnik, verringerte Arbeitssicherheit und Gefahren durch zu hohe Temperaturen. Die DE-A-26 35 400 offenbart ein Verfahren zur Herstellung von PU-Elastomeren aus TDI- oder MDI-Prepolymeren und einem aromatischem Diamin in Pulverform mit einer Teilchengröße von 3 bis 10 µm in heterogener Phase bei Temperaturen unterhalb des Schmelzpunktes der aromatischen Diamine. Es wird aber nicht beschrieben, ob ein solches Verfahren auch unterhalb von 80°C möglich wird. Insbesondere ist M-CDEA nicht als mögliches Diamin genannt.

Es ist daher Aufgabe der Erfindung, ein Verfahren zur Herstellung von Polyurethan-Elastomeren auf der Basis von TDI- und/oder MDI-Prepolymeren und M-CDEA zu schaffen, mittels dessen Polyurethan-Elastomere hergestellt werden können, die qualitativ heißgehärteten Elastomeren entsprechen und die eine verlängerte Topfzeit aufweisen und die die oben beschriebenen Nachteile überwindet.

Diese Aufgabe wird durch die Merkmale des Anspruchs 1 gelöst.

Dazu ist erfindungsgemäß vorgesehen, TDI- und/oder MDI-Prepolymere, die bei Raumtemperatur flüssig sind, mit festem M-CDEA, das eine mittlere Korngröße von < 30mym aufweist und das Verfahren bei Temperaturen von 15 °C bis 30°C durchgeführt wird.

Es sind erfindungsgemäß auch Prepolymere einsetzbar, die bis 50°C schmelzen, da auch hierbei die Temperaturen derart niedrig sind, daß die Topfzeiten akzeptabel sind. Einsetzbar sind modifizierte MDI, auch in Form von isomerischen Gemischen ferner IPDI, aliphatische und cycloaliphatische Isosyanate, Dl- und Polycyanate.

Wesentlich für das erfindungsgemäße Verfahren ist, daß die mittlere Korngröße des M-CDEA < 30 mym beträgt, da überraschenderweise in dieser Form die Synthese bei Raumtemperatur durchführbar ist. Das M-CDEA kann als Pulver, Paste oder Suspension eingesetzt werden.

Für das erfindungsgemäße Verfahren werden die Komponenten innig vermischt und anschließend unter reduziertem Druck entgast. Das Gemisch wird in entsprechende Formen gefüllt.

Durch das erfindungsgemäße Verfahren wird vorteilhafterweise eine Topfzeit von über 1 Stunde erreicht.

Die nach dem erfindungsgemäßen Verfahren hergestellten Formteile müssen gegenüber dem Stand der Technik nicht mehr getempert werden.

Bei dem erfindungsgemäßen Verfahren ist durch die niedrigere Reaktionstemperatur stets gewährleistet, daß das Prepolymer über die volle Reaktivität verfügt, so daß hochqualitative Elastomere erhalten werden, die sonst nur bei optimaler Verfahrensführung mittels heißhärtenden Systemen erhalten werden können. Besonders vorteilhaft ist die gegenüber dem Stand der Technik beträchtlich verlängerte Topfzeit, die die Verarbeitung erheblich vereinfacht. Zudem können durch die niedrige Reaktionstemperatur auch Anwendungsbereiche erschlossen werden, die bisher durch die hohen Temperaturen um 100°C verwehrt waren. Ferner können einfache handwerkliche Mischmethoden ohne die Gefahr von Verbrennungen verwendet werden.

Die Erfindung beschränkt sich nicht nur auf das Verfahren, sondern umfaßt auch die Verwendung von M-CDEA mit einer mittleren Korngröße von < 30 mym, das somit in fester Form vorliegt, und verfahrensgemäße Polyurethan-Elastomere.

Weitere vorteilhafte Ausgestaltungen sind in den Unteransprüchen gekennzeichnet.

Nachstehend wird die Erfindung anhand von Beispielen für die Vernetzung mit festem M-CDEA näher erläutert.

### Vergleichsbeispiel A

300g kommerziell erhältliches Adiprene® LF 900 von Uniroyal (TDI-Prepolymer mit einem NCO-Gehalt von 3,8%) wurden bei Raumtemperatur mit 48,9g (0,13 Mol) kommerziell erhaltlichem 4,4'-Metylen-bis-(3-chloro-2,6-diethylanilin) (LONZACURE® MCDEA von LONZA AG) und einer mittleren Korngröße von > 100 mym während 5 Minuten innig vermischt. Anschließend wurde das Gemisch während 3 Minuten unter reduziertem Druck entgast und dann in offene Metallformen mit den Abmessungen 200 x 200 x 2 bzw. 200 x 200 x 6 mm gegossen und die Zeit bis zum deutlichen Anstieg der Viskosität (=Verarbeitungszeit) bestimmt.

Diese Zeit betrug > 1 Stunde. Nach weiteren 12 Stunden wurden die Platten entformt und während 7 Tagen im Normklimaraum (24°C / 50% Luftfeuchtigkeit) gelagert.

### Vergleichsbeispiel B

300g kommerziell erhältliches Adiprene® LF 900 von Uniroyal (TDI-Prepolymer mit einem NCO-Gehalt von 3,8%) wurden bei 70°C mit 48,9g (0,13 Mol) geschmolzen, 95°C heißen 4,4'-Metylen-bis-(3-chloro-2,6-diethylanilin) während 30 Sekunden innig vermischt und anschließend in 100°C heiße, offene Metallformen mit den Abmessungen 200 x 200 x 2 bzw. 200 x 200 x 6 mm gegossen. Die Verarbeitungszeit betrug 4 Minuten. Nach 30 Minuten wurde entformt und danach während 12 Stunden in einen Umluftofen bei 100 °C getempert. Anschließend wurden die Platten 7 Tage im Normalklimaraum gelagert.

### Beispiel 1 (Erfindung)

Ersetzt man im Beispiel A das kommerziell erhältliche 4,4'-Methylen-bis-(3-chloro-2,6-diethylanilin) durch ein auf eine Partikelgröße von < 30 mym gemahlenes 4,4'-Methylen-bis-(3-chloro-2,6-diethylanilin), so erhält man bei ansonsten identischen Verarbeitungsverhältnissen eine Verarbeitungszeit von ebenfalls > 1 Stunde. Nach weiteren 12 Stunden wurde entformt und die Platten während 7 Tagen im Normalklimaraum gelagert.

### Beispiel 2 (Erfindung)

Das im Beispiel A eingesetzte kommerziell erhältliche 4,4'-Methylen-bis-(3-chloro-2,6-diethylanilin) wird bei gleicher Stöchiometrie durch auf eine Partikelgröße von < 30 mym gemahlenes 4,4'-Methylen-bis-(3-chloro-2,6-diethylanilin) mit einem Anteil von ca. 15% Kieselsäure, z.B. CAB-0-SIL M5 versetzt, so daß bei ansonsten identischen Verarbeitungsverhältnissen eine Verarbeitungszeit von ca. 40 Minuten erhalten wird. Nach weiteren 12 Stunden wurde entformt und die Platten während 7 Tagen im Normalklimaraum gelagert.

Die Platten aus den Beispielen A, b, 1 und 2 wurden auf folgende Prüfparameter geprüft:

| | |
|---|---|
| Härte Shore A | DIN 53505 |
| Spannung bei 300 % Dehnung | DIN 53504 |
| Zugfestigkeit [N/mm²] | DIN 53504 |
| Bruchdehnung % | DIN 53504 |

| | Vergleichsbeispiel A | Vergleichsbeispiel B | Erfindungsbeispiel 1 | Erfindungsbeispiel 2 |
|---|---|---|---|---|
| Härte Share A | 82 | 90 | 90 | 89 |
| Spannung bei 300% | gerissen | 10,4 | 12,3 | 12,6 |
| Zugfestigkeit [N/mm²] | 7,2 | 14,1 | 14,5 | 16,5 |
| Bruchdehnung % | 180 | 320 | 310 | 360 |

Wie aus den Werten ersichtlich, besteht zwischen den Eigenschaften von Vergleichsbeispiel B (heißgehärtet) und den Erfindungsbeispielen 1 und 2 kein wesentlicher Unterschied. Dagegen fällt Vergleichsbeispiel A in den Werten stark ab.

Das erfindungsgemäße Verfahren bietet daher alle Vorteile, die sich durch die Kalthärtung ergeben, wobei jedoch die physikalischen Eigenschaften der erfindungsgemäß hergestellten Elastomere denen von heißgehärteten Systemen entsprechen.

## Patentansprüche

1. Verfahren zur Herstellung von Polyurethan-Elastomeren auf der Basis von TDI- und/oder MDI-Prepolymeren und M-CDEA (4,4'-Methylen-bis-(3-chloro-2,6-diethylanilin)),
**dadurch gekennzeichnet,**
**daß** das M-CDEA eine mittlere Korngröße von < 30 mym aufweist und das Verfahren bei Temperaturen von 15°C bis 35°C durchgeführt wird.

2. Verfahren nach Anspruch 1,
**dadurch gekennzeichnet,**
**daß** die TDI- und MDI-Prepolymere bei Temperaturen von 15°C bis 35°C flüssig sind.

3. Verfahren zur Herstellung von Polyurethan-Elastomeren auf der Basis von TDI- undloder MDI-Prepolymeren und M-CDEA (4,4'-Methylen-bis-(3-chloro-2,6-diethylanilin)),
**dadurch gekennzeichnet,**
**daß** die TDI- undloder MDI-Prepolymere bis 50°C schmelzen, so daß das Verfahren bei Temperaturen < 50°C durchgeführt wird.

4. Verfahren nach einem der Ansprüche 1 bis 3,
**dadurch gekennzeichnet,**
**daß** das M-CDEA in Form eines Pulvers, einer Paste oder einer Suspension verwendet wird.

5. Verfahren nach einem der Ansprüche 1 bis 4,
**dadurch gekennzeichnet,**
**daß** das TDI- und/oder MDI-Prepolymer und das M-CDEA innig miteinander vermischt werden, wobei ggf. das TDI- und/oder MDI-Prepolymer vorher in Schmelze zu bringen ist und daß das Gemisch anschließend unter reduziertem Druck entgast wird, wobei das Gemisch danach verarbeitbar ist

6. Verfahren nach einem der Ansprüche 1 bis 5,
**dadurch gekennzeichnet,**
**daß** 4,4'-Methylen-bis-(3-chloro-2,6-diethylanilin) mit einem Anteil von Kieselsäure, insbesondere CAB-0-SIL M5, eingesetzt wird.

7. Verfahren nach Anspruch 6,
**dadurch gekennzeichnet,**
**daß** Kieselsäure mit einem Anteil von ca. 15% verwendet wird.

8. Verfahren nach einem der Ansprüche 1 bis 7,
**dadurch gekennzeichnet,**
**daß** 300g kommerziell erhältliches Adiprene® LF 900 von Uniroyal (TDI-Prepolymer mit einem NCO-Gehalt von 3,8%) bei Raumtemperaturen mit 48,9g (0,13 Mol) auf eine Prtikelgröße von < 30 mym gemahlenes 4,4'-Methylen-bis-(3-Chloro-2,6-diethylanilin), innig vermischt werden, anschließend das Gemisch unter reduziertem Druck entgast und nach einer Verarbeitungszeit von > 1 Stunde dann in offene Metallformen mit den Abmessungen 200 x 200 x 2 bzw. 200 x 200 x 6 mm gegossen, nach 12 Stunden entformt und die erhaltene Platte während 7 Tage im Normalklimaraum gelagert werden.

9. Verfahren nach einem der Ansprüche 1 bis 7,
**dadurch gekennzeichnet,**
**daß** 300g kommerziell erhältliches Adiprene® LF 900 von Uniroyal (TDI-Prepolymer mit einem NCO-Gehalt von 3,8%) bei Raumtemperaturen mit 48,9g (0,13 Mol) auf eine Partikelgröße von < 30 mym gemahlenes 4,4'-Methylen-bis-(3-Chloro-2,6-diethylanilin) mit einem Anteil von ca. 15% Kieselsäure, z.B. CAB-0-SIL M5 versetzt, innig vermischt werden, anschließend das Gemisch unter reduziertem Druck entgast und nach einer Verarbeitungszeit von ca. 40 Minuten dann in offene Metallformen mit den Abmessungen 200 x 200 x 2 bzw. 200 x 200 x 6 mm gegossen, nach 12 Stunden entformt wird und die erhaltene Platte während 7 Tage im Normalklimaraum gelagert werden.

10. Verwendung von M-CDEA zur Herstellung von Polyurethan-Elastomeren durch Härtung von TDI- und/oder MDI-Prepolymeren,
**dadurch gekennzeichnet,**
**daß** das M-CDEA mit oder ohne einem Zusatz von Kieselsäure eine mittlere Korngröße von < 30 mym aufweist.

11. Verwendung nach Anspruch 10,
**dadurch gekennzeichnet,**
**daß** das M-CDEA in Form eines Pulvers, einer Paste oder einer Suspension verwendet wird.

## Claims

1. A method for producing polyurethane elastomers on the basis of TDI and/or MDI prepolymers and M-CDEA (4,4'-methylene-bis-(3-chloro-2,6-diethylaniline)),
**characterized in**
**that** the M-CDEA has a mean grain size of < 30 mym and that the method is carried out at temperatures from 15°C to 35°C.

2. A method according to claim 1,
**characterized in**
**that** the TDI and/or MDI prepolymers are liquid at temperatures from 15°C to 35°C.

3. A method for producing polyurethane elastomers on the basis of TDI and/or MDI prepolymers and M-CDEA (4,4'-methylene-bis-(3-chloro-2,6-diethylaniline)),
**characterized in**
**that** the TDI and/or MDI prepolymers melt up to 50 °C so that the method is carried out at temperatures < 50 °C.

4. A method according to any of the claims 1 to 3,
**characterized in**
**that** the M-CDEA is used in form of a powder, a paste or a suspension.

5. A method according to any of the claims 1 to 4,
**characterized in**
**that** the TDI and/or MDI prepolymer and the M-CDEA are mixed homogeneously together, whereby the TDI and/or MDI prepolymer is eventually to be liquefied before and that then the mixture is degased under a reduced pressure, whereby the mixture is processable thereafter.

6. A method according to any of the claims 1 to 5,
**characterized in**
**that** 4,4'-methylene-bis-(3-chloro-2,6-diethyleaniline) is used with a share of silicic acid, especially CAB-O-SIL M5.

7. A method according to claim 6,
**characterized in**
**that** silicic acid is used with a share of approximately 15 %.

8. A method according to any of the claims 1 to 7,
**characterized in**
**that** 300 g commercially available Adiprene® LF 900 of Uniroyal (TDI-prepolymer with a NCO content of 3,8 %) have been homogeneously mixed at ambient temperatures with 48,9 g (0,13 mol) 4,4'-methylene-bis-(3-chloro-2,6-diethylaniline) ground to a grain size of < 30 mym and the mixture has then been degased under a reduced pressure and then, after a processing time of > 1 hour, casted in open metal moulds with the dimensions 200 x 200 x 2 or 200 x 200 x 6 mm, removed from the moulds after 12 hours and the obtained plate has been stored during 7 days in a room conditioned with standard atmosphere.

9. A method according to any of the claims 1 to 7,
**characterized in**
**that** 300 g commercially available Adiprene® LF 900 of Uniroyal (TDI-prepolymer with a NCO content of 3,8 %) have been homogeneously mixed at ambient temperatures with 48,9 g (0,13 mol) 4,4'-methylene-bis-(3-chloro-2,6-diethylaniline) ground to a grain size of < 30 mym with a share of 15% silicic acid, for example CA-O-SIL M5, the mixture has then been degased under a reduced pressure and then, after a processing time of approximately 40 minutes, casted in open metal moulds with the dimensions 200 x 200 x 2 or 200 x 200 x 6 mm, removed from the moulds after 12 hours and the obtained plate has been stored during 7 days in a room conditioned with standard atmosphere.

10. Use of MCDEA for producing polyurethane elastomers by hardening TDI and/or MDI prepolymers,
**characterized in**
**that** the M-CDEA with or without addition of silicic acid has a mean grain size of < 30 mym.

11. Use according to claim 10,
**characterized in**
**that** the M-CDEA is used in form of a powder, a paste or a suspension.

## Revendications

1. Procédé pour la production d'élastomères de polyuréthane à base de prépolymères de TDI et/ou de MDI et de M-CDEA (4,4'-méthylène-bis-(3-chloro-2,6-diéthylaniline),
**caractérisé en ce**
**que** le M-CDEA a une grosseur de grain moyenne de < 30 mym et le procédé est effectué à des températures de 15°C à 35°C.

2. Procédé selon la revendication 1,
**caractérisé en ce**
**que** les prépolymères de TDI et MDI sont liquides à des températures de 15°C à 35°C.

3. Procédé pour la production d'élastomères de polyuréthane à base de prépolymères de TDI et/ou de MDI et de M-CDEA (4,4'-méthylène-bis-(3-chloro-2,6-diéthylaniline),
**caractérisé en ce**
**que** les prépolymères de TDI et/ou de MDI fondent jusqu'à 50°C si bien que le procédé est effectué à des températures < 50°C.

4. Procédé selon l'une des revendications 1 à 3,
**caractérisé en ce**
**que** le M-CDEA est utilisé sous forme de poudre, de pâte ou de suspension.

5. Procédé selon l'une des revendications 1 à 4,
**caractérisé en ce**
**que** les prépolymères de TDI et/ou de MDI et le M-CDEA sont mélangés intimement, le prépolymère de TDI et/ou de MDI étant éventuellement préalablement liquéfié et que le mélange est ensuite dégazé à une pression réduite, le mélange étant ensuite transformable.

6. Procédé selon l'une des revendications 1 à 5,
**caractérisé en ce**
**que** le 4,4'-méthylène-bis-(3-chloro-2,6-diéthylaniline) est mis en oeuvre avec une part d'acide silicique, en particulier de CAB-O-SIL M5.

7. Procédé selon la revendication 6,
**caractérisé en ce**
**que** l'acide silicique est utilisé avec une part d'environ 15%.

8. Procédé selon l'une des revendications 1 à 7,
**caractérisé en ce**
**que** 300 g d'Adiprene® LF 900 commercial d'Uniroyal (prépolymère de TDI avec un taux de NCO de 3,8%) ont été mélangés intimement à des températures ambiantes à 48,9g (0,13 mol) de 4,4-méthylène-bis-(3-chloro-2,6-diéthylaniline) moulus à une grandeur de particules de < 30 mym, le mélange a ensuite été dégazé à une pression réduite et a été coulé, après un temps de traitement de > 1 heure, dans des moules métalliques ouverts de dimensions 200 x 200 x 2 ou 200 x 200 x 6 mm, démoulé après 12 heures et la plaque obtenue a été stockée pendant 7 jours dans une pièce à atmosphère contrôlée.

9. Procédé selon l'une des revendications 1 à 7,
**caractérisé en ce**
**que** 300 g d'Adiprene® LF 900 commercial d'Uniroyal (prépolymère de TDI avec un taux de NCO de 3,8%) ont été mélangés intimement à des températures ambiantes à 48,9g (0,13 mol) de 4,4-méthylène-bis-(3-chloro-2,6-diéthylaniline) moulus à une grandeur de particules de < 30 mym avec un taux d'environ 15% d'acide silicique, par exemple CAB-O-SIL M5, le mélange a ensuite été dégazé à une pression réduite et a été coulé, après un temps de traitement d'environ 40 minutes, dans des moules métalliques ouverts de dimensions 200 x 200 x 2 ou 200 x 200 x 6 mm, démoulé après 12 heures et la plaque obtenue a été stockée pendant 7 jours dans une pièce à atmosphère contrôlée.

10. Utilisation de M-CDEA pour la production d'élastomères de polyuréthane par durcissement de prépolymères de TDI et/ou MDI,
**caractérisée en ce**
**que** le M-CDEA avec ou sans addition d'acide silicique présente une grosseur de grain moyenne de < 30 mym.

11. Utilisation selon la revendication 10,
**caractérisée en ce**
**que** le M-CDEA est utilisé sous forme de poudre, de pâte ou de suspension.
